# EUROPÄISCHE PATENTSCHRIFT

(11) **EP 3 189 316 B1**
(45) Veröffentlichungstag und Bekanntmachung des Hinweises auf die Patenterteilung: **25.05.2022**
(21) Anmeldenummer: 15762483.4
(22) Anmeldetag: 21.08.2015
(51) Int. Cl.: G01J 5/00, G01J 5/02, G01J 5/08, G01J 5/04, G01J 5/54

(54) **VERFAHREN ZUR SYSTEMINTERNEN KALIBRIERUNG EINER MESSVORRICHTUNG ZUR OPTISCHEN TEMPERATURBESTIMMUNG EINES GESCHMOLZENEN METTALS**
METHOD FOR THE SYSTEM-INTERNAL CALIBRATION OF A MEASURING DEVICE FOR THE OPTICAL TEMPERATURE DETERMINATION OF A MOLTEN METAL
PROCÉDÉ POUR L'ÉTALONNAGE INTERNE AU SYSTÈME D'UN DISPOSITIF DE MESURE AFIN DE DÉTERMINER OPTIQUEMENT LA TEMPÉRATURE D'UN MÉTAL EN FUSION

(30) Priorität: 01.09.2014 DE 102014012697
(43) Veröffentlichungstag der Anmeldung: 12.07.2017
(73) Patentinhaber: Minkon GmbH, 40699 Erkrath (DE)
(72) Erfinder: FISCHER, Harald, 40822 Mettmann (DE); WÜNSCH, Gerhard, 40822 Mettmann (DE); LAMP, Torsten, 40223 Düsseldorf (DE); KÖCHNER, Herbert, 50259 Pulheim (DE)
(74) Vertreter: König Szynka Tilmann von Renesse Patentanwälte Partnerschaft mbB
(86) Internationale Anmeldenummer: PCT/EP2015/001715
(87) Internationale Veröffentlichungsnummer: WO 2016/034272

(56) Entgegenhaltungen:
- GB-A- 1 166 887
- US-A- 5 730 527
- US-A- 6 004 031
- US-A1- 2005 175 065

## Beschreibung

Die Erfindung betrifft ein Verfahren zur systeminternen Kalibrierung einer Messvorrichtung zur optischen Temperaturbestimmung eines geschmolzenen Metalls.

Ein solches Verfahren ist beispielsweise aus der WO 2007/079894 A1 bekannt. Hierbei wird ein Lichtwellenleiter einem Behälter eines Konverters, der geschmolzenes Metall aufnimmt, zugeführt. Der Lichtwellenleiter hat die Aufgabe, die elektromagnetische Strahlung des geschmolzenen Metalls zu einem optischen Detektor zu leiten. Zwischen dem optischen Detektor und dem Behälter ist eine fluiddurchströmte Leitung angeordnet, in der der Lichtwellenleiter geführt und in der der Lichtwellenleiter mit Hilfe des Fluids transportiert wird. Es ist eine Abspulvorrichtung vorgesehen, die den Lichtwellenleiter sukzessive von einem Vorrat abspult. Dies ist erforderlich, weil die hohen Temperaturen an der Messstelle dazu führen, dass der Lichtwellenleiter an seinem in das geschmolzene Metall eingetauchten Ende allmählich aufschmilzt und entsprechend nachgeführt werden muss. Ist der Lichtwellenleiter aufgebraucht, muss ein neuer Lichtwellenleiter eingesetzt werden. Weitere Verfahren zur optischen Temperaturbestimmung eines geschmolzenen Metalls sind aus der US 5 730 527 und der US 6 004 031 bekannt.

Um zuverlässige Messwerte zu erhalten, ist es bei einem derartigen Verfahren erforderlich, im Vorfeld der Messung, insbesondere nach Einsatz eines neuen Lichtwellenleiters, eine Kalibrierung der Messvorrichtung (Prüfmittel) durchzuführen. Bei einer Kalibrierung wird der Messwert eines Prüfmittels (Prüfwert) mit dem Messwert eines Normals (Kalibrierwert) verglichen. Ist die Abweichung des Prüfwertes von dem Kalibrierwert unzulässig hoch, erfolgt eine Justage. Dabei wird die Messvorrichtung eingestellt bzw. abgeglichen, um die systematische Abweichung so weit zu beseitigen, wie es für die vorgesehene Anwendung erforderlich ist. Nach der Justage muss erneut eine Kalibrierung durchgeführt werden. Diese Schritte müssen unter Umständen so oft wiederholt werden, bis eine akzeptable Abweichung erzielt wird. Als Normale kommen zweckmäßigerweise Messvorrichtungen zum Einsatz, die geringe Messabweichungen aufweisen.

Normale erfordern in der Regel neben den bereits vorhandenen Messvorrichtungen einen zusätzlichen Zugang zum geschmolzenen Metall, um die Temperatur zu bestimmen. Es ist beispielsweise bekannt, dass Messlanzen mit endseitig angebrachten Thermoelementen in das geschmolzene Metall eingeführt werden. Diese Art der Messung wird beispielsweise beim Konverterprozess zur Stahlherstellung angewendet. Nachteilig ist dabei, dass der Prozess unterbrochen werden muss. Die für die Temperaturmessung und daraus abgeleitete Korrekturmaßnahmen benötigte Zeitspanne erschwert die Prozesssteuerung und den Prozessablauf und wirkt sich somit nachteilig auf die Stahlqualität aus.

Alternativ werden Pyrometer als Normale eingesetzt, um die Temperatur in einem geschmolzenen Metall zu bestimmen. Aus der Praxis ist es beispielsweise bekannt, zur kontinuierlichen in situ Temperaturmessung eine pyrometrische Analyse der vom Stahlbad ausgesandten elektromagnetischen Strahlung durchzuführen. So wird beispielsweise die Stahlbadoberfläche beobachtet. Bei diesem Verfahren führt ein stark schwankender Emissionsgrad des heterogenen und stark bewegten Badspiegels jedoch zu inakzeptablen Messunsicherheiten.

Ferner ist überlegt worden, in der feuerfesten Ausmauerung einer Konverterwand Einbauten, wie beispielsweise Fenster, vorzusehen. Diese sind jedoch aufgrund der optischen Degenerierung durch die hohen Temperaturen, die typischerweise bis zu 1800 °C betragen können, nachteilbehaftet. In der feuerfesten Ausmauerung vorgesehene Zugänge unterliegen wiederum einer starken mechanischen Beanspruchung durch Setzvorgänge, die die meist röhrenförmigen Zugänge zur Schmelze so stark deformieren, dass ein optischer Zugang zum Stahlbad entlang der Sichtlinie nicht mehr möglich ist.

Derartige Nachteile beschränken sich nicht nur auf den Konverterprozess, sondern erfassen nahezu alle Prozesse mit geschmolzenem Metall. Zu denken ist etwa an den Stranggießprozess und der problematischen Zugänglichkeit zu Messstellen im Gießverteiler, Tauchrohr oder in der Kokille. Häufig ist die Zugänglichkeit zu bestimmten Messstellen grundsätzlich oder, etwa prozessbedingt, zeitweise nicht möglich.

Vor diesem Hintergrund liegt der Erfindung die Aufgabe zugrunde, ein Verfahren zur systeminternen Kalibrierung einer Messvorrichtung zur optischen Temperaturbestimmung eines geschmolzenen Metalls vorzuschlagen.

Diese Aufgabe wird durch den Gegenstand des Anspruchs 1 gelöst. Vorteilhafte Ausführungsformen sind in den Unteransprüchen angegeben.

Die Erfindung geht von dem Grundgedanken aus, dass eine Messvorrichtung mit mehreren Messketten systemintern kalibriert wird. Dabei dient eine kalibrierte Messkette einer anderen Messkette (Ersatzmesskette) als systeminternes Normal.

Die Messvorrichtung zur optischen Temperaturbestimmung eines geschmolzenen Metalls weist somit mindestens zwei Messketten auf. Eine Messkette umfasst erfindungsgemäß mehrere Messkettenelemente. Hauptsächliche Aufgaben einer Messkette sind die Messgrößenaufnahme, Messsignalverarbeitung und Messwertausgabe. Diese Aufgaben werden durch einzelne oder mehrere Messkettenelemente gelöst. Beispiele für Messkettenelemente sind Sensoren (zur Messwertaufnahme), Rechnereinheiten (zur Messignalverarbeitung) und Anzeigegeräte (zur Messwertausgabe).

Eine Ersatzmesskette unterscheidet sich in mindestens einem Messkettenelement von der Messkette. Die Ersatzmesskette weist ein anderes Messkettenelement zur Messgrößenaufnahme (Messgrößenaufnehmer) als die Messkette auf. Insbesondere vorzugsweise sind die übrigen Messkettenelemente gemeinsame Messkettenelemente der Messkette und der Ersatzmesskette (verzweigte Messketten). Die Messabweichung beim Kalibrieren ist dann lediglich auf ein Messkettenelement zurückzuführen. Insbesondere wird dadurch die Justage vereinfacht und die Anzahl der Messkettenelemente (Vorrichtungen) reduziert. Vorstellbar ist aber auch, dass die Messkette und die Ersatzmesskette jeweils ausschließlich eigene Messkettenelemente aufweisen.

Bei dem erfindungsgemäßen Verfahren weist die Messkette einen Lichtwellenleiter als Messgrößenaufnehmer und die Ersatzmesskette einen Ersatzlichtwellenleiter als Messgrößenaufnehmer auf. Der Lichtwellenleiter hat die Aufgabe, von dem Metall oder von der Spitze des Lichtwellenleiters emittierte elektromagnetische Strahlung zu einem optischen Detektor zu leiten. Insbesondere bevorzugt ist der Ersatzlichtwellenleiter vom gleichen Typ wie der Lichtwellenleiter. Es sind aber auch Ausführungsformen denkbar, bei denen als Ersatzlichtwellenleiter ein anderer Typ verwendet wird, beispielsweise wenn mit dem Ersatzlichtwellenleiter die Temperatur in einer anderen Behandlungsphase des geschmolzenen Metalls gemessen werden soll.

In einer bevorzugten Ausführungsform wird die Messkette mittels eines systemexternen Normals kalibriert. Unter "systemexternes Normal" ist ein Normal zu verstehen, das nicht von der Messvorrichtung umfasst ist. Vorzugsweise handelt es sich dabei um ein Thermoelement. Grundsätzlich können jedoch beliebige Messvorrichtungen zur Temperaturbestimmung, wie z. B. ein Pyrometer, als systemexternes Normal verwendet werden.

In einer bevorzugten Ausführungsform weist die Messvorrichtung eine Abspulvorrichtung mit einer Fördervorrichtung zum sukzessiven Abspulen des Lichtwellenleiters von einem Vorrat und des Ersatzlichtwellenleiters von einem Ersatzvorrat auf. Ferner weist die Abspulvorrichtung in einer besonders bevorzugten Ausführungsform eine Aufnahmevorrichtung zur Aufnahme eines Vorrats und mindestens eines Ersatzvorrats auf. Der Vorrat und mindestens ein Ersatzvorrat können dadurch in die Aufnahmevorrichtung eingesetzt werden. Dies kann beispielsweise durch Aufschieben, Einschieben, Aufsetzen oder dergl. an der für den Vorrat und den Ersatzvorrat (bzw. Ersatzvorräte) vorgesehenen Aufnahmestelle in der Aufnahmevorrichtung erfolgen. Vorzugsweise werden der Vorrat und der Ersatzvorrat (die Ersatzvorräte) gleichzeitig bzw. in einem Arbeitsvorgang eingesetzt. Falls erforderlich, umfasst das Einsetzen auch den Anschluss des Lichtwellenleiters und des Ersatzlichtwellenleiters (die Ersatzlichtwellenleiter) an die Fördervorrichtung und erforderlichenfalls weitere Maßnahmen, damit infolgedessen das Abspulen, vorzugsweise automatisch, stattfinden kann. Das sukzessive Abspulen kann dabei kontinuierlich oder intermittierend erfolgen.

Der Einsatz der Abspulvorrichtung vereinfacht das erfindungsgemäße Verfahren deutlich und führt zu einer spürbaren Zeitersparnis. So sind beispielsweise aufgrund der Verwendung des Vorrats und mindestens eines Ersatzvorrats lange Benutzungszeiten der Messvorrichtung ohne Unterbrechungen aufgrund von Kalibrierung, Justage und Vorratswechsel (Benutzungsintervall) möglich.

In einer bevorzugten Ausführungsform erfolgt die Kalibrierung der Ersatzmesskette kurz vor dem Verbrauch des Vorrats. Als verbraucht gilt der Vorrat insbesondere dann, wenn sein zur Aufnahme der elektromagnetischen Strahlung des geschmolzenen Metalls vorgesehener Abschnitt weggeschmolzen ist. Sinnvollerweise ist dabei der Abschnitt des Lichtwellenleiters von der Aufnahmevorrichtung bis kurz vor der Messstelle nicht zu berücksichtigen. Insbesondere bevorzugt erfolgt die Kalibrierung der Ersatzmesskette nach der letzten Messung mit dem Lichtwellenleiter. Der Ersatzlichtwellenleiter befindet sich dann üblicherweise in dem geschmolzenen Metall oder in der Nähe des geschmolzenen Metalls, sodass im Anschluss an die Kalibrierung ohne nennenswerte Unterbrechungen der Messvorgang mit dem Ersatzlichtwellenleiter beginnen kann.

Jedoch kann die erfindungsgemäße Kalibrierung der Ersatzmesskette grundsätzlich zu allen Zeiten erfolgen. Insbesondere kann es vorteilhaft sein, die Kalibrierung der Ersatzmesskette nach der Kalibrierung der Messkette mit einem externen Normal und vor der ersten Messung mit dem Lichtwellenleiter durchzuführen. Es ist bekannt, dass Messvorrichtungen bzw. Messketten im Laufe ihrer Benutzung technisch bedingt größere Messunsicherheiten aufweisen. Die Kalibrierung der Ersatzmesskette nach der Kalibrierung der Messkette mit einem externes Normal und vor der ersten Messung mit dem Lichtwellenleiter bietet zur Justage der Ersatzmesskette einen sehr genauen Kalibrierwert.

In einer bevorzugten Ausführungsform nehmen der Lichtwellenleiter zur Bestimmung des Kalibrierwertes und der Ersatzlichtwellenleiter zur Bestimmung des Prüfwertes an derselben Messstelle die elektromagnetische Strahlung der Metallschmelze auf. Der Begriff "Messstelle" ist weit auszulegen und umfasst sowohl einen Messpunkt im geschmolzenen Metall bzw. in der Umgebung des geschmolzenen Metalls als auch kleinere oder größere Bereiche des geschmolzenen Metalls und der Umgebung des geschmolzenen Metalls. In der Praxis dürften insbesondere prozessbedingte Faktoren Einfluss auf die Wahl der Messstelle haben. Vorzugsweise ist ein enger Bereich als Messstelle zu wählen, da hier der Temperaturgradient üblicherweise klein ist und dem Kalibrierwert und dem Prüfwert die gleiche Messgröße zu Grunde liegt. Insbesondere bevorzugt werden Kalibrierwert und Prüfwert zeitgleich bzw. innerhalb einer kurzen Zeitspanne bestimmt.

In einer bevorzugten Ausführungsform wird mittels eines optischen Multiplexers gesteuert, ob das Signal von dem Lichtwellenleiter oder das Signal von dem Ersatzlichtwellenleiter dem optischen Detektor zugeleitet wird.

Erfindungsgemäß wird der optische Detektor zur Bestimmung der Temperatur des Metalls aus einer Analyse der von dem Lichtwellenleiter oder Ersatzlichtwellenleiter weitergeleiteten elektromagnetischen Strahlung eingesetzt. Vorzugsweise ist der optische Detektor gemeinsames Messkettenelement der Messkette und der Ersatzmesskette. Besonders vorzugsweise unterscheidet sich die Messkette von der Ersatzmesskette lediglich dadurch, dass die Messkette als Messgrößenaufnehmer den Lichtwellenleiter und die Ersatzmesskette als Messgrößenaufnehmer den Ersatzlichtwellenleiter aufweist. Durch den Einsatz des optischen Multiplexers, der im Wesentlichen eine Weichenfunktion erfüllt, können verzweigte Messketten genutzt werden. Der optische Multiplexer ist dabei nicht darauf beschränkt, Signale von nur zwei Eingangsleitungen auf eine Ausgangsleitung zu übertragen. Somit kann der optische Multiplexer auch bei verzweigten Messketten mit mehr als einer Ersatzmesskette verwendet werden.

In einer bevorzugten Ausführungsform wird eine Ersatzmesskette mittels einer zuvor kalibrierten Ersatzmesskette als systeminternes Normal kalibriert. Unter "systeminternes Normal" ist ein Normal zu verstehen, dass von der erfindungsgemäßen Messvorrichtung umfasst ist. Durch die systeminterne Kalibrierung einer Ersatzmesskette mittels einer zuvor kalibrierten Messkette ist es nicht erforderlich, eine externe Kalibrierung durchzuführen, nachdem der Ersatzlichtwellenleiter aufgebraucht ist. Stattdessen kann ein zweiter Ersatzlichtwellenleiter zum Einsatz kommen. Auf diese Weise kann eine (zumindest theoretisch) beliebig lange Kette systemintern kalibrierter Ersatzmessketten entstehen. Das Benutzungsintervall der Messvorrichtung kann damit deutlich verlängert werden.

Es wird eine Abspulvorrichtung beschrieben, die zur Durchführung eines Verfahrens zur optischen Temperaturbestimmung eines geschmolzenen Metalls dient, bei dem mittels eines Lichtwellenleiters von dem Metall oder von der Spitze des Lichtwellenleiters emittierte elektromagnetische Strahlung zu einem optischen Detektor geleitet wird. Besonders bevorzugt dient die Abspulvorrichtung zur Durchführung des erfindungsgemäßen Verfahrens.

Die hohen Temperaturen an der Messstelle führen dazu, dass der Lichtwellenleiter an seinem in das geschmolzene Metall eingetauchten bzw. in unmittelbarer Nähe zu dem geschmolzenen Metall gebrachten Ende allmählich erweicht und sich verzehrt. Die Nachführung des Lichtwellenleiters durch die Abspulvorrichtung führt dazu, dass eine zur Aufnahme der von dem Metall emittierten oder zur Emission der repräsentativen elektromagnetischen Strahlung fähige Oberfläche des Lichtwellenleiters stets in das geschmolzene Metall eingetaucht bzw. in der zur Aufnahme oder Emission der elektromagnetischen Strahlung notwendigen Nähe zu dem geschmolzenen Metall befindlich ist.

Die Abspulvorrichtung weist eine Aufnahmevorrichtung für einen Vorrat und mindestens einen Ersatzvorrat auf. Insbesondere bevorzugt weist die Aufnahmevorrichtung Aufnahmestellen für den Vorrat und mindestens einen Ersatzvorrat auf. Bei einer Aufnahmestelle kann es sich beispielsweise um eine stabförmige Vorrichtung handeln. Diese eignet sich besonders gut für Vorräte / Ersatzvorräte in Gestalt einer Trommelwinde mit axialer Zentralbohrung, über die der Vorrat / Ersatzvorrat praktischerweise in die stabförmige Vorrichtung eingeschoben werden kann. Die Abspulvorrichtung befindet sich vorzugsweise in einer Einhausung. Alternativ können sich auch weitere Vorrichtungen in der Einhausung befinden wie etwa Teile einer Messvorrichtung.

Die Abspulvorrichtung weist ferner eine Fördervorrichtung zum sukzessiven Abspulen des Lichtwellenleiters von einem Vorrat und mindestens eines Ersatzlichtwellenleiters von einem Ersatzvorrat auf. In einer bevorzugten Ausführungsform weist die Fördervorrichtung mindestens eine fluiddurchströmte Leitung auf. Dabei wird der Lichtwellenleiter und / oder Ersatzlichtwellenleiter in der Leitung mittels der Fluidströmung transportiert.

Vorzugsweise wird dieselbe fluiddurchströmte Leitung, zumindest abschnittsweise, sowohl für den Transport des Lichtwellenleiters als auch für den Transport mindestens eines Ersatzlichtwellenleiters verwendet. Daraus ergeben sich eine platzsparende Bauweise und die Einsparung von Material und Kosten (etwa für die Montage und Wartung einer zusätzlichen Leitung). Indem der Lichtwellenleiter und der Ersatzlichtwellenleiter über dieselbe Leitung der Messstelle zugeführt werden, ist die Messstelle zur Bestimmung des Kalibrierwertes und des Prüfwertes durch den Leitungsquerschnitt auf einen üblicherweise sehr engen Bereich beschränkt. Denkbar sind auch Ausführungsformen, in denen für den Transport des Lichtwellenleiters und Ersatzlichtwellenleiters unterschiedliche Leitungen vorgesehen sind.

Die fluiddurchströmte Leitung kann eine gesondert für die Zuführung des Lichtwellenleiters / Ersatzlichtwellenleiters vorgesehene Transportleitung sein, die beispielsweise oberhalb einer freien Oberfläche des geschmolzenen Metalls enden kann und den Lichtwellenleiter / Ersatzlichtwellenleiter dort in Kontakt oder in die Nähe des geschmolzenen Metalls bringt, um die von dem Metall emittierte elektromagnetische Strahlung aufzunehmen. Ebenso kann die Transportleitung an einer in der Wandung eines Behälters vorgesehenen Öffnung enden und den Lichtwellenleiter / Ersatzlichtwellenleiter dem Metall über diese Öffnung zuführen, wobei das in der Leitung strömende Fluid zusätzlich den Vorteil aufweist, dass es ein Zusetzen dieser Öffnung zumindest teilweise verhindern kann. Alternativ und bevorzugt wird als Leitung für den Transport des Lichtwellenleiters / Ersatzlichtwellenleiters ein bereits an einem Behälter zur Aufnahme geschmolzenen Metalls vorgesehenes Fluid-Leitungssystem verwendet, wie beispielsweise das Leitungssystem für das Zuführen von Behandlungsgas. Ebenso ist eine Kombination aus einer speziell für den Lichtwellenleiter / Ersatzlichtwellenleiter vorgesehenen Transportleitung und einem vorhandenen Leitungssystem möglich.

Der Lichtwellenleiter / Ersatzlichtwellenleiter kann mit Oberflächeneigenschaften versehen sein, die eine besonders gute Übertragung der Transportkräfte des Fluids auf den Lichtwellenleiter / Ersatzlichtwellenleiter erlauben, wie beispielsweise eine besondere Strukturierung der Oberfläche des Lichtwellenleiters / Ersatzlichtwellenleiter. Bevorzugt wird ferner ein weicher, biegsamer Lichtwellenleiter / Ersatzlichtwellenleiter eingesetzt, wie er beispielsweise aus der Kommunikationstechnik bekannt ist. Diese erlauben es besonders gut, den Lichtwellenleiter um Ecken, Verengungen oder Bögen des Leitungssystems zu transportieren. Der Transport des Lichtwellenleiters / Ersatzlichtwellenleiters mittels der Fluidströmung kann kontinuierlich oder diskontinuierlich erfolgen und insbesondere geregelt werden.

In einer bevorzugten Ausführungsform verfügt der Lichtwellenleiter über keine separate Metallummantelung.

In einer bevorzugten Ausführungsform wird ein Lichtwellenleiter einem des Typs G 62,5/125 mit einem Außendurchmesser von 0,9 mm eingesetzt. Dabei hat es sich beispielsweise als zweckmäßig erwiesen, das Fluid mit einer Geschwindigkeit von 5 ^{m}/ₛ durch die Leitung strömen zu lassen.

Als Fluid für den Transport des Lichtwellenleiters in der Leitung wird vorzugsweise entweder ein ohnehin für die Behandlung des geschmolzenen Metalls notwendiges Fluid, beispielsweise Sauerstoff, verwendet. Alternativ können auch andere Gase eingesetzt werden, wie beispielsweise Inertgase.

In einer bevorzugten Ausführungsform weist die Fördervorrichtung mindestens zwei gegenläufige Walzen auf, wobei mindestens eine Walze eine Antriebswalze sein kann. Der Lichtwellenleiter und / oder mindestens ein Ersatzlichtwellenleiter kann in einer bevorzugten Ausführungsform durch den Walzenspalt geführt und mittels der Walzen transportiert werden. Der Einsatz eines Walzenpaares kann aber auch dazu dienen, die Abspulmenge eines allein durch den Fluidstrom in Leitung transportierten Lichtwellenleiters zu kontrollieren. Droht der Lichtwellenleiter beispielsweise durch den Fluidstrom mitgerissen zu werden, so kann dann das Walzenpaar eine Rückhaltekraft auf den Lichtwellenleiter aufgebracht werden, mit der das Abspulen kontrolliert werden kann. Sinnvollerweise kann der Lichtwellenleiter und mindestens ein Ersatzlichtwellenleiter mittels eines jeweiligen Walzenaggregats (insbesondere Walzenpaar) transportiert werden. Denkbar ist aber auch ein Transport mittels eines gemeinsamen Walzenaggregats.

In einer bevorzugten Ausführungsform ist der Vorrat und / oder Ersatzvorrat eine Spule. Als Spule kommt beispielsweise ein um eine Trommelwinde gewickelter Lichtwellenleiter / Ersatzlichtwellenleiter in Betracht. Alternativ können andere Vorräte / Ersatzvorräte wie beispielsweise ein in Schlaufen gelegter Lichtwellenleiter / Ersatzlichtwellenleiter, ein Knäuel oder dergl. vorgesehen sein. Ein Ende des Lichtwellenleiters / Ersatzlichtwellenleiters des Vorrats / Ersatzvorrats wird mittels der Fördervorrichtung der Messstelle zugeführt, während das andere Ende mit dem Detektor verbunden ist.

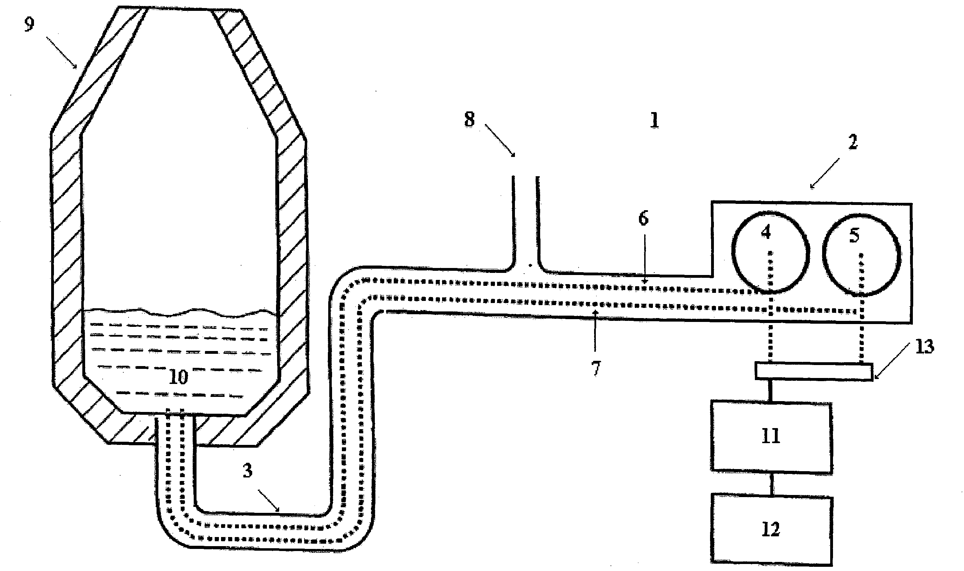

Nachfolgend wird die Erfindung anhand einer lediglich ein Ausführungsbeispiel zeigenden Zeichnung näher erläutert. Darin zeigt die einzige Figur eine schematische Darstellung der Abspulvorrichtung zur Durchführung eines Verfahrens zur optischen Temperaturbestimmung eines geschmolzenen Metalls.

Die Figur zeigt eine Abspulvorrichtung 1 mit einer Aufnahmevorrichtung 2 und einer Fördervorrichtung 3.

In der Aufnahmevorrichtung 2 befinden sich ein Vorrat 4 und ein Ersatzvorrat 5. Der Vorrat ist eine Spule, um die ein Lichtwellenleiter 6 gewickelt ist. Der Ersatzvorrat ist ebenfalls eine Spule, um die allerdings ein Ersatzlichtwellenleiter 7 gewickelt ist.

Die Fördervorrichtung 3 ist eine fluiddurchströmte Leitung. Sie dient in diesem Beispiel sowohl dem Transport des Lichtwellenleiters 6 als auch des Ersatzlichtwellenleiters 7. Das Transportfluid wird über eine Fluidzufuhr 8 in die fluiddurchströmte Leitung eingespeist. (Die Fluidquelle ist hier nicht dargestellt.)

Ferner dargestellt ist ein Behälter 9, der geschmolzenes Metall 10 beinhaltet. Über eine Bodenöffnung ist der Behälter 9 mit der fluiddurchströmten Leitung 3 verbunden.

Strömt Fluid über die Fluidzufuhr 8 in die fluiddurchströmte Leitung 3, wird der Lichtwellenleiter 6 bzw. der Ersatzlichtwellenleiter 7 über die Bodenöffnung des Behälters 9 dem geschmolzenen Metall 10 zugeführt. Dort nimmt der Lichtwellenleiter 6 bzw. Ersatzlichtwellenleiter 7 die elektromagnetische Strahlung des geschmolzenen Metalls 10 auf und leitet diese an einen optischen Detektor 11 weiter, der die optischen Signale in elektrische Signale umwandelt. Die elektrischen Signale können von einer Signalauswertung 12 weiter bearbeitet werden, um die Temperatur des geschmolzenen Metalls 10 zu ermitteln.

Dem optischen Detektor ist ein optischer Multiplexer 13 vorgeschaltet. Der optische Multiplexer 13 steuert, ob das Signal des Lichtwellenleiters 6 oder das Signal des Ersatzlichtwellenleiters 7 dem optischen Detektor 11 zugeführt wird.

In der dargestellten beispielhaften Anordnung befinden sich sowohl der Lichtwellenleiter 6 als auch der Ersatzlichtwellenleiter 7 endseitig in dem geschmolzenen Metall 10. Diese Anordnung stellt insbesondere den Moment der systeminternen Kalibrierung dar, in dem über den Lichtwellenleiter 6 der Kalibrierwert und über den Ersatzlichtwellenleiter 7 der Prüfwert bestimmt werden.

## Patentansprüche

1. Verfahren zur systeminternen Kalibrierung einer Messvorrichtung zur optischen Temperaturbestimmung eines geschmolzenen Metalls, wobei die Messvorrichtung aufweist:
- einen Lichtwellenleiter (6) mit einem in das geschmolzene Metall (10) eingetauchten oder in unmittelbare Nähe zu dem geschmolzenen Metall gebrachten Ende, um von dem Metall (10) oder von der Spitze des Lichtwellenleiters (6) emittierte elektromagnetische Strahlung zu einem optischen Detektor (11) zu leiten,
- einen optischen Detektor (11) zur Bestimmung der Temperatur des Metalls aus einer Analyse der elektromagnetischen Strahlung,
- eine Messkette, wobei die Messkette mehrere Messkettenelemente umfasst, und die hauptsächlichen Aufgaben einer Messkette die Messgrößenaufnahme, Messsignalverarbeitung und Messwertausgabe sind, wobei in der Messkette der Lichtwellenleiter (6) der Messgrößenaufnehmer ist,
**dadurch gekennzeichnet, dass** die Messvorrichtung weiterhin mindestens eine Ersatzmesskette mit mindestens einem Ersatzlichtwellenleiter (7) aufweist, wobei der Ersatzlichtwellenleiter (7) ein in das geschmolzene Metall (10) eingetauchtes oder in unmittelbare Nähe zu dem geschmolzenen Metall gebrachtes Ende aufweist, um von dem Metall (10) oder von der Spitze des Ersatzlichtwellenleiters (7) emittierte elektromagnetische Strahlung zu einem optischen Detektor zu leiten, und wobei der Ersatzlichtwellenleiter (7) der Messgrößenaufnehmer in der Ersatzmesskette ist, und
das Verfahren die Kalibrierung der Ersatzmesskette mittels der Messkette als systeminternes Normal umfasst.

2. Verfahren nach Anspruch 1, **gekennzeichnet durch** Kalibrierung der Messkette mittels eines systemexternen Normals, vorzugsweise eines Thermoelements.

3. Verfahren nach Anspruch 1 oder 2, **dadurch gekennzeichnet, dass** der Lichtwellenleiter (6) sukzessive durch eine Fördervorrichtung (3) einer Abspulvorrichtung (1) der Messvorrichtung von einem Vorrat (4) abgespult und der Ersatzlichtwellenleiter (7) sukzessive von einem Ersatzvorrat (5) abgespult wird.

4. Verfahren nach einem der Ansprüche 1 bis 3, **dadurch gekennzeichnet, dass** der Lichtwellenleiter (6) zur Bestimmung des Kalibrierwerts und der Ersatzlichtwellenleiter (7) zur Bestimmung des Prüfwerts im Wesentlichen an derselben Messstelle die elektromagnetische Strahlung der Metallschmelze aufnehmen.

5. Verfahren nach einem der Ansprüche 1 bis 4, **dadurch gekennzeichnet, dass** mittels eines optischen Multiplexers (13) gesteuert wird, ob das Signal von dem Lichtwellenleiter (6) oder das Signal von dem Ersatzlichtwellenleiter (7) dem optischen Detektor (11) zugeleitet wird.

6. Verfahren nach einem der vorherigen Ansprüche, **dadurch gekennzeichnet, dass** eine weitere Ersatzmesskette mittels einer zuvor kalibrierten Ersatzmesskette als systeminternes Normal kalibriert wird.

## Claims

1. Method for the system-internal calibration of a measuring device for the optical temperature determination of a molten metal, wherein the measuring device has:
- an optical waveguide (6) with one end immersed in the molten metal (10) or brought into the immediate vicinity of the molten metal, in order to guide electromagnetic radiation emitted from the metal (10) or from the tip of the optical waveguide (6) to an optical detector (11),
- an optical detector (11) for determining the temperature of the metal from an analysis of the electromagnetic radiation,
- a measuring chain, wherein the measuring chain comprises multiple measuring chain elements and the principle functions of a measuring chain are the recording of the measured variable, measurement signal processing and measured value output, wherein in the measuring chain the optical waveguide (6) is the measured variable pick-up,
**characterized in that** the measuring device furthermore has at least one replacement measuring chain with at least one replacement optical waveguide (7), wherein the replacement waveguide (7) has an end immersed in the molten metal (10) or brought into the immediate vicinity of the molten metal, in order to guide electromagnetic radiation emitted from the metal (10) or from the tip of the replacement optical waveguide (7) to an optical detector, and wherein the replacement optical waveguide (7) is the measured variable pick-up in the replacement measuring chain, and
the method comprises the calibration of the replacement measuring chain by means of the measuring chain as a system-internal measuring standard.

2. Method according to Claim 1, **characterized by** calibration of the measuring chain by means of a system-external measuring standard, preferably a thermocouple.

3. Method according to Claim 1 or 2, **characterized in that** the optical waveguide (6) is successively reeled by a conveying device (3) of a reeling device (1) of the measuring device from a stock (4) and the replacement optical waveguide (7) is successively reeled from a replacement stock (5).

4. Method according to one of Claims 1 to 3, **characterized in that** the optical waveguide (6) for determining the calibration value and the replacement optical waveguide (7) for determining the test value record the electromagnetic radiation of the molten metal at substantially the same measurement point.

5. Method according to one of Claims 1 to 4, **characterized in that** by means of an optical multiplexer (13), it is possible to control whether the signal from the optical waveguide (6) or the signal from the replacement optical waveguide (7) is supplied to the optical detector (11).

6. Method according to one of the preceding claims, **characterized in that** a further replacement measuring chain is calibrated by means of a previously calibrated replacement measuring chain as the system-internal measuring standard.

## Revendications

1. Procédé pour l'étalonnage interne au système d'un dispositif de mesure afin de déterminer optiquement la température d'un métal en fusion, le dispositif de mesure ayant :
- une fibre optique (6) ayant une extrémité immergée dans le métal en fusion (10) ou amenée à proximité immédiate du métal en fusion pour conduire le rayonnement électromagnétique émis par le métal (10) ou par la pointe de la fibre optique (6) vers un détecteur optique (11),
- un détecteur optique (11) pour déterminer la température du métal à partir d'une analyse du rayonnement électromagnétique,
- une chaîne de mesure, la chaîne de mesure comprenant plusieurs éléments de chaîne de mesure, et les tâches principales d'une chaîne de mesure sont l'enregistrement des grandeurs mesurées, le traitement des signaux mesurés et la sortie des valeurs mesurées, la fibre optique (6) étant le capteur de mesure dans la chaîne de mesure,
**caractérisé en ce que** le dispositif de mesure a également au moins une chaîne de mesure de remplacement avec au moins une fibre optique de remplacement (7), la fibre optique de remplacement (7) ayant une extrémité immergée dans le métal en fusion (10) ou amenée à proximité immédiate du métal en fusion pour conduire le rayonnement électromagnétique émis par le métal (10) ou par la pointe de la fibre optique de remplacement (7) vers un détecteur optique, et la fibre optique de remplacement (7) étant le capteur de mesure dans la chaîne de mesure de remplacement, et
le procédé comprend l'étalonnage de la chaîne de mesure de remplacement au moyen de la chaîne de mesure comme étalon interne au système.

2. Procédé selon la revendication 1, **caractérisé par** l'étalonnage de la chaîne de mesure au moyen d'un étalon externe au système, de préférence un thermocouple.

3. Procédé selon la revendication 1 ou 2, **caractérisé en ce que** la fibre optique (6) est successivement dévidée d'une réserve (4) par un dispositif de transport (3) d'un dispositif de dévidage (1) du dispositif de mesure et la fibre optique de remplacement (7) est successivement dévidée d'une réserve de remplacement (5).

4. Procédé selon l'une des revendications 1 à 3, **caractérisé en ce que** la fibre optique (6) pour déterminer la valeur d'étalonnage et la fibre optique de remplacement (7) pour déterminer la valeur de test captent le rayonnement électromagnétique du métal fondu essentiellement sur le même point de mesure.

5. Procédé selon l'une des revendications 1 à 4, **caractérisé en ce qu'un** multiplexeur optique (13) est utilisé pour contrôler si le signal de la fibre optique (6) ou le signal de la fibre optique de remplacement (7) est envoyé au détecteur optique (11).

6. Procédé selon l'une des revendications précédentes, **caractérisé en ce qu'une** autre chaîne de mesure de remplacement est étalonnée comme étalon interne au système au moyen d'une chaîne de mesure de remplacement précédemment étalonnée.
